# EUROPÄISCHE PATENTANMELDUNG

(11) **EP 0 972 957 A2**
(43) Veröffentlichungstag der Anmeldung: **19.01.2000**
(21) Anmeldenummer: 99113023.8
(22) Anmeldetag: 06.07.1999
(51) Int. Cl.: F16C 11/06

(54) **Kugelgelenk und Verfahren zu dessen Herstellung**

(30) Priorität: 17.07.1998 DE 19832254
(71) Anmelder: Sachsenring Entwicklungsgesellschaft mbH, 08058 Zwickau (DE)
(72) Erfinder: Strauch, Jürgen, Dipl.-Ing., 08115 Lichtentanne (DE); Trepte, Jens, Dr.-Ing., 09129 Chemnitz (DE); Wackes Ullrich, Ing., 08115 Lichtentanne (DE)
(74) Vertreter: Rumrich, Gabriele

(57) **Zusammenfassung**

Die Erfindung betrifft ein Kugelgelenk, welches ein Gehäuse (1) mit einem Hohlraum (1.1) und mindestens eine Montageöffnung zur Aufnahme einer in einer Gleitschale (2) beweglich gelagerten Kugel (3) eines Kugelzapfens (4) aufweist und mit einem Zwischenraum zwischen der Wandung des Hohlraums (1.1) des Gehäuses (1) und der Außenwandung der Gleitschale (2), der mit einem injizierfähigen Material (5) gefüllt ist. Erfindungsgemäß weist die Gleitschale (2) mindestens einen Schlitz (2.2) auf, der das Einlegen der Kugel (3) des Kugelzapfens (4) gewährleistet und/oder die Gleitschale 2 ist in zwei Gleitschalenbereiche 2a, 2b unterteilt, und/oder an der Außenwandung (2.4) der Gleitschale (2) sind hakenförmige federnde Noppen (2.5) angeordnet und/oder der der Montageöffnung (2.1) der Gleitschale (2) gegenüberliegende Polbereich (2.3) weist eine nach außen weisende Wölbung (2.8) auf und/oder der sich an die Montageöffnung (1.2 oder 1.3) anschließende Randbereich des Gehäuses (1) verjüngt sich an seinem gesamten Umfang oder segmentweise nach dem Montieren der Gleitschale (2) und der Kugel so, daß die Breite der Zuführöffnung umlaufend oder bereichsweise geringer ist, als der Durchmesser der Gleitschale (3) /oder das Gehäuse (1) weist eine sich an dessen Hohlraum (1.1) anschließende Aussparung auf.

## Beschreibung

Die Erfindung betrifft ein Kugelgelenk und ein Verfahren zu dessen Herstellung.
Nach DE 296 17 276 U1 ist ein Kugelgelenk bekannt, welches ein mit einem Hohlraum versehenes Gehäuse aufweist, in dem eine Kugel in einer Lageschale beweglich gelagert ist. Die Gleitschale wird aus Kunststoff erzeugt, der durch eine zum Hohlraum reichende Öffnung in das Kugelgehäuse injiziert wird. Nachteilig dabei ist, daß der injizierte Kunststoff an der Kugel haften kann, so daß die Bewegungsfreiheit des Kugelzapfens und der Kugel im Verhältnis zur Gleitschale und dem Gehäuse beeinträchtigt ist.
Es sind weiterhin Kugelgelenke bekannt, bei welchem die Kugel in eine Gleitschale eingesetzt wird, die man durch eine Montageöffnung in den Hohlraum des Gehäuses einbringt und in der beabsichtigten Endlage positioniert. Der Raum zwischen der Wandung der Gleitschale und der Wandung des Hohlraumes wird durch eine Zuführöffnung im Gehäuse mit injizierfähigem Material gefüllt, das eine Zwischenschicht zwischen Gleitschale und Gehäuse bildet.
Weiterhin ist bei derartigen Kugelgelenken nachteilig, daß durch die Schwindung des injizierten Materials (Kunststoffs) oft eine ungenügende Verriegelung zwischen dem injiziertem Material und der Gleitschale sowie dem Gehäuse vorhanden ist und unter ungünstigen Bedingungen der zwischen Kugel und Gleitschale vorhandene Schmierstoft aus dem Innenraum des Gelenkes austreten kann. Bei dem zuletzt genannten Stand der Technik ist es weiterhin schwierig, die Kugel in die Gleitschale einzubringen und eine genaue Positionierung von Gleitschale und Kugel im Hohlraum des Gehäuses zu gewährleisten. Beim Injizieren des Kunststoffes durch die im Polbereich der Gleitschale angeordnete Öffnung im Gehäuse kann es weiterhin durch den auf den Polbereich wirkenden Druck zu einer Deformierung der Gleitschale in Richtung zu der herstellungsbedingten Abflachung oder Zentrierung im Polbereich der Kugel kommen, wodurch wiederum die Bewegungsfreiheit der Kugel beeinträchtigt wird. Es kann weiterhin bei hoher Belastung, insbesondere axialer Belastung, des Kugelgelenkes nach DE 296 17 276 U1 die Kugel aus der injizierten Gleitschale und bei dem weiter beschriebenem Stand der Technik die Gleitschale mit der Kugel aus der injizierten Zwischensicht gebrochen werden.

Aufgabe der Erfindung ist es, ein Kugelgelenk zu entwickeln, welches eine sichere Funktion gewährleistet und gleichzeitig einfacher und kostengünstiger herstellbar ist.

Das Kugelgelenk weist dabei bekannter Weise ein Gehäuse mit einem Hohlraum und mindestens einer Montageöffnung zur Aufnahme einer in einer Lageschale beweglich gelagerten Kugel eines Kugelzapfens auf. Der Zwischenraum zwischen der Wandung der Lageschale und der Wandung des Hohlraumes des Gehäuses wird mit einem injizierbaren Material, vorzugsweise Kunststoff gefüllt, das eine Zwischenschicht zwischen Gleitschale und Gehäuse bildet.
Erfindungsgemäß können zur Lösung der Aufgabe alle, einige oder nur eines der folgenden Merkmale der konstruktiven Ausbildung des Kugelgelenkes realisiert werden:
1. Die Gleitschale kann mindestens einen Schlitz aufweisen, der das Auffedern der Gleitschale zum Einlegen der Kugel des Kugelzapfens durch die Montageöffnung und das Rückfedern der Gleitschale in die Ausgangsposition gewährleistet. Der Schlitz erstreckt sich dabei von der Montageäffnung in Richtung zu dem gegenüberliegenden Polbereich der Gleitschale.
2. Die Gleitschale ist in mindestens zwei Gleitschalenbereiche unterteilt, die zum umschließen der Kugel zusammensetzbar sind.
3. An der Außenwandung der Gleitschale sind hakenförmige federnde Noppen angeordnet, die einerseits die Lagefixierung der Gleitschale im Gehäuse und andererseits die Verdrehsicherung zwischen der Gleitschale und dem injiziertem Material gewährleisten.
4. Der Polbereich der Gleitschale weist eine nach außen weisende Wölbung auf, die eine Deformierung der Gleitschale durch Druck und Temperatur beim Injizieren des Materials verhindert. Gleichzeitig wird ein besseres Strömungsverhalten beim Injizieren erreicht, was zu einer Verringerung des für das Injektionsverfahren notwendigen Zwischenraums zwischen Gleitschale und Hohlraum des Gehäuses sowie zu einer Verbesserung des Schwindungsverhaltens führt.
5. Der sich an die Zuführöffnung anschließende Randbereich des Gehäuses ist an seinem gesamten Umfang oder segmentweise nach dem Montieren der Gleitschale und der Kugel so verjüngt, daß die Breite der Zuführöffnung umlaufend oder bereichsweise geringer ist, als der Durchmesser der Gleitschale. Dadurch werden Axialkräfte zuverlässig aufgenommen und daß Ausreißen der Kugel und der Gleitschale aus dem injiziertem Werkstoff verhindert.
6. Das Gehäuse weist eine sich an dessen Hohlraum anschließende Aussparung und/oder Durchmesserveränderung auf, in welcher das injizierte Material verdrehsicher zum Gehäuse verankert ist.

Diese Merkmale können durch vorteilhafte Ausführungsvarianten weiter ausgebildet sein. So können die Schlitze in der Gleitschale von deren Öffnung in Richtung zum Polbereich geradlinig oder spiralförmig erstrecken.
Bei Teilung der Gleitschale ist es möglich, die Gleitschalenbereiche über ein Faitscharnier miteinander zu verbinden. Zum Verankern können die Gleitschalenbereiche über geeignete Rastelemente zusammengefügt werden. Die Ränder der Gleitschalenbereiche sollten dabei nach deren Zusammenfügen dicht aneinander anliegen um das Eindringen von injizierbarem Material zwischen die Gleitschale und die Kugel zu vermeiden. Dabei muß die Gleitschale vollständig an der Kugel anliegen um das Eindringen von injiziertem Material zu verhindern. Dazu können die Randbereiche auch ineinandergreifende Elemente haben, z.B. in der Art von Nut und Feder.
Um eine gute Federwirkung und Zentrierung in Gehäusen mit großen Toleranzen zu gewährleisten, erstrecken sich die Noppen tangential zur Wölbung der Außenwandung der Gleitschale und sind radial in Richtung zur Gleitschale federnd ausgebildet. Die Noppen schließen sich bei Anwendung von Schlitzen vorzugsweise diese an. Bei Teilung der Gleitschale in zwei oder mehrere Bereiche können sich die Noppen auch an die Randbereiche der Gleitschalenbereiche anschließen.
Bei einer Teilung der Gleitschale in zwei Gleitschalenbereiche können zu den Noppen an der Teilungsebene im Winkel von beispielsweise 45° dazu weitere Noppen vorgesehen sein. Die Noppen bestehen vorzugsweise aus dem gleichen Werkstoff wie die Gleitschale und werden direkt an diese angeformt, z.B. durch Spritzgießen. Sie liegen nach dem Einlegen der Gleitschale mit dem Kugelzapfen im Gehäuse an der Wandung des Hohlraums des Gehäuses lagefixierend an und sind nach dem Injizieren des Materials verdrehsicher in diesem eingebettet. Zur Gewährleistung einer richtigen Zentrierung sind die Noppen in etwa im Äquatorbereich der Gleitschale einzeln oder paarweise in gleichen oder ungleichen Teilungsabständen angeordnet.

Die Wandung der Gleitschale im Bereich der Wölbung in deren Polbereich kann verstärkt oder nicht verstärkt sein. Im letzteren Fall kann die sich dadurch in Richtung zur Kugel bildende Aussparung zur Aufnahme von Schmiermittel dienen. Die in Richtung zum Kugelbolzen weisende Öffnung des Gehäuses kann gleichzeitig als Montageöffnung dienen. Es kann jedoch dieser Öffnung gegenüberliegend auch eine Montageöffnung im Gehäuse angeordnet sein. Vorteilhafter Weise bildet die Montageöffnung des Gehäuses gleichzeitig die Zuführöffnung für das zu injizierende Material. Es besteht auch die Möglichkeit, die in Richtung zum Bolzen weisende Öffnung des Gehäuses Montageöffnung und die Gegenüberliegende Öffnung als Zuführöffnung zum Injizieren zu verwenden.
Als injizierfähiges Material findet vorzugsweise Kunststoff, mineralischer Stoff, mineralische Verbindungen oder Kombinationen dieser Materialien Anwendung.

Die Herstellung des Kugelgelenkes erfolgt durch injizieren eines injizierfähigen Materials in den Zwischenraum zwischen die Außenwandung der Lageschale in welcher sich eine Kugel eines Kugelzapfens befindet und die Wandung des Hohlraumes des Gehäuses, wobei die Gleitschale mit der Kugel des Kugelzapfens in dem Hohlraum positioniert wird und das Gehäuse mindestens eine in Richtung zum Kugelzapfen weisende Öffnung aufweist, die als Montageöffnung dienen kann, unter Anwendung eines ersten Werkzeugteils, welches am Gelenk aus Richtung des Kugelzapfens angreift und bedarfsweise mit einem zweiten Werkzeugteil, welches dem ersten Werkzeugteil gegenüberliegend angeordnet ist und am Gelenk angreift, wobei beide Werkzeugteile zum Beschicken der zu verbindenden Elemente und zur Entnahme des Gelenks relativ zueinander bewegbar sind und beim Injizieren am Gehäuse abdichten. Erfindungsgemäß erfolgt die Positionierung und Lagefixierung der Gleitschale mit der darin befindlichen Kugel des Kugelzapfens durch die am Außenumfang der Gleitschale angeordneten federnden Noppen, die sich an die Wandung des Hohlraumes anlegen. Dabei werden große Toleranzunterschiede eines z.B. im Schmiedeverfahren hergestellten Gehäuses und einer dünnen Gleitschale bei gleichmäßiger Anpressung der Gleitschale an die Kugel überbrückt und gleichzeitig die Gleitschale gegen die Kugel vorgespannt.
Nach dem Lagefixieren erfolgt anschließend beim Schließen des Werkzeugs mit dem Werkzeugteil, welches aus Richtung der Montageöffnung am Gehäuse angreift, gleichzeitig das umlaufende oder bereichsweise Umformen des Randbereiches der Montageöffnung. Anschließend wird das injizierfähige Material über die Zuführöffnung in den Zwischenraum zwischen Wandung der Gleitschale und Wandung des Hohlraumes des Gehäuses injiziert, wobei gleichzeitig verdrehsicher die federnden Noppen umschlossen werden. Je nachdem, ob sich die Montageöffnung an der in Richtung zum Kugelschaft weisenden Seite des Gelenks befindet oder dieser gegenüberliegend angeordnet ist, erfolgt das Umformen mit dem ersten aus Richtung des Stempels angreifenden Werkzeugteil oder mit dem gegenüber angeordneten zweiten Werkzeugteil. Vorzugsweise erfolgt mit dem Werkzeugteil, welches die Umformung des Gehäuses durchführt, auch das Injizieren des Materials. Die Umformfläche zwischen Werkzeug und Gehäuse bildet dabei auch eine zuverlässige Dichtfläche zum Injizieren des Materials. Die Schließkraft des Spritzwerkzeuges wird dabei gleichzeitig für die Umformung des Gehäuses genutzt. Die Umformkraft muß daher geringer sein als die Schließkraft. Um eine verdrehsichere Verankerung auch zwischen dem injiziertem Material und dem Gehäuse zu erzielen, können in dem Gehäuse sich an dessen Hohlraum anschließende Aussparungen und/oder Durchmesserveränderungen vorgesehen werden, in welche sich das Material beim Injizieren einformt.
Mit der Erfindung wird ein funktionssicheres Kugelgelenk geschaffen, welches einfach und kostengünstig herstellbar ist.
Die Erfindung wird nachfolgend anhand von Ausführungsbeispielen und zugehörigen Zeichnungen näher erläutert. Es zeigen:
- Fig. 1:: Gehäuse des Kugelgelenks
- Fig. 2:: Gleitschale in 3-D Ansicht mit Nuten sowie mit Noppen im Äquatorbereich
- Fig. 3:: Gleitschale mit Wölbung an der Polkappe sowie mit Nuten und Noppen in Seitenansicht
- Fig. 4:: Gleitschale gern. Fig. 3 aus Richtung Polkappe
- Fig. 5:: Geteilte Gleitschale mit gewölbter Polkappe
- Fig. 6:: Einführen von Kugelzapfen und Gleitschale in das auf dem zweiten Werkzeugteil aufliegende Gehäuse
- Fig. 7:: Geschlossenes Werkzeug vor dem Injizieren des Materials
- Fig. 8:: Geschlossenes Werkzeug nach dem Injizieren des Materials
- Fig. 9:: Werkzeug mit eingelegtem Kugelgelenk nach dem Injizieren des injizierfähigen Materials mit dessen Zuführung durch das erste Werkzeugteil
- Fig. 10:: fertig montiertes Kugelgelenk

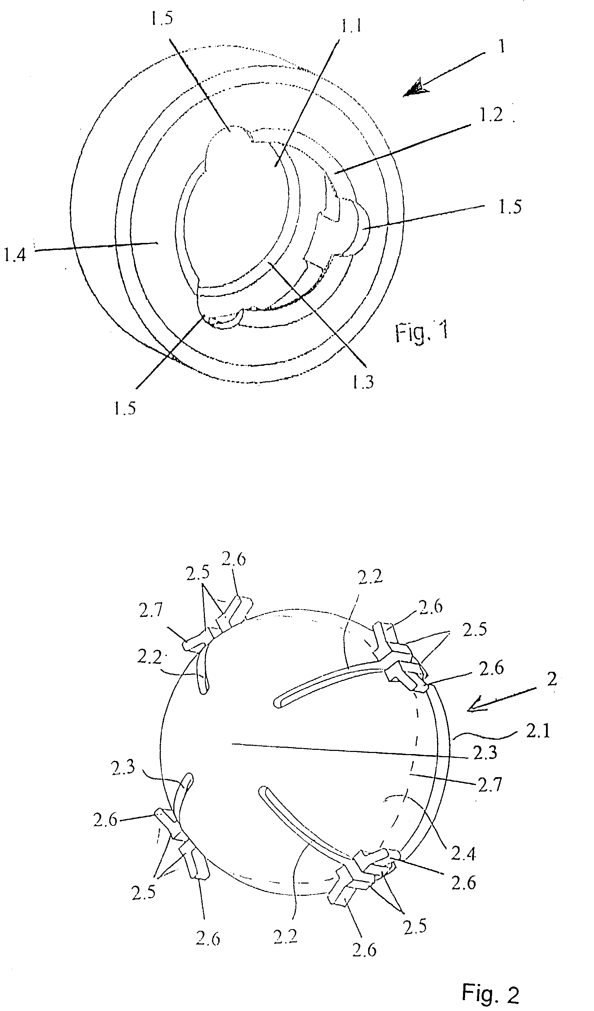

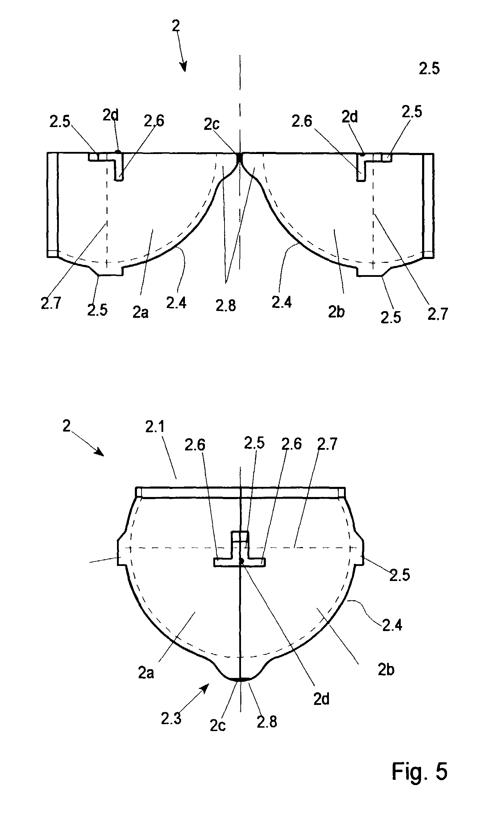

In Fig. 1 wird das Gehäuse 1 des Kugelgelenks als Einzelteil dargestellt. Es weist einen Hohlraum 1.1 mit zwei sich gegenüberliegenden Öffnungen 1.2 und 1.3 auf. Der Randbereich 1.4 des Gehäuses 1, in welchem sich die Öffnung 1.2 befindet, ist hier mit drei Aussparungen 1.5 versehen, in welchen sich das injizierte Material verdrehsicher zum Gehäuse verankert. Die Aussparungen 1.5 schließen sich hier unmittelbar an die Öffnung 1.2 an und sind halbkreisförmig ausgebildet. Das Gehäuse 1 kann beispielsweise als Metallgußteil, Blechformteil, Kaltfließpreßteil oder Schmiedeteil ausgebildet sein.
Eine Gleitschale 2 in dreidimensionaler Ansicht wird in Fig. 2 gezeigt. Diese weist eine Öffnung 2.1 und vier zueinander um 90° versetzte Schlitze 2.2 auf, die sich von der Öffnung 2.1 in Richtung zum Polbereich 2.3 erstrecken. und das Auffedern der Gleitschale 2 zum Einlegen der hier nicht dargestellten Kugel des Kugelzapfens durch die Öffnung 2.1 und das Rückfedern der Gleitschale 2 in die Ausgangsposition zum Umschließen der Kugel gewährleisten. An der Wandung 2.4 der Gleitschale 2 sind paarweise hakenförmige federnde Noppen 2.5 angeordnet, die sich jeweils unmittelbar beidseitig an die Schlitze 2.2 anschließen. Jedes Noppenpaar weist hakenförmigen in Richtung zur Gleitschale federbare Enden 2.6 auf, die voneinander wegweisen. Die Noppen 2.5 sind in Höhe des Äquatorbereichs 2.7 der Gleitschale 2 angeordnet. Die Gleitschale 2 und die Noppen 2.5 bestehen aus dem gleichen Werkstoff, wobei die Noppen 2.5 an die Gleitschale 2 angeformt sind.

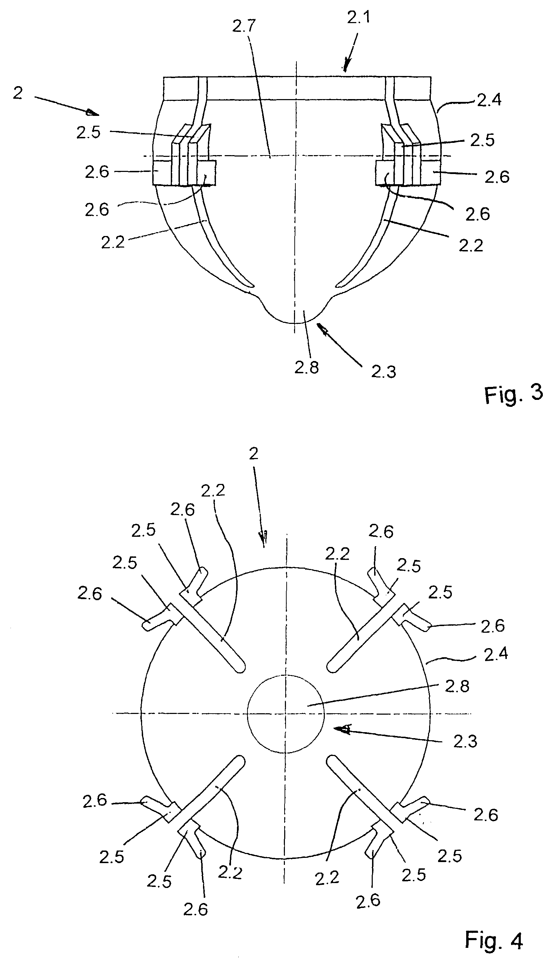

In Fig. 3 ist in der Seitenansicht eine ähnliche Gleitschale 2 dargestellt, jedoch ist bei dieser der Polbereich 2.3 mit einer Wölbung 2.8 versehen. Die Wandung 2.4 der Gleitschale 2 im Bereich der Wölbung 2.8 kann verstärkt oder nicht verstärkt sein. Im letzteren Fall kann die sich dadurch in Richtung zur Kugel bildende Aussparung zur Aufnahme von Schmiermittel dienen (hier nicht dargestellt). Die Sicht aus Richtung der verstärkten Polkappe zeigt Fig. 4. Man erkennt hier deutlich, daß die federbar ausgebildeten Enden 2.6 der Noppen 2.5 gut dazu geeignet sind eine sichere Fixierung in dem Gehäuse 1 zu erzielen und auch die Verdrehsicherung nach dem umspritzen mit dem injizierfähigen Material 5 zu gewährleisten.
Eine weitere Variante der Gleitschalenausbildung mit gewölbten Polbereich wird in Fig. 5 dargestellt. Die Gleitschale 2 ist dabei in zwei Gleitschalenbereiche 2a, 2b unterteilt, die über ein Faltscharnier mit einander verbunden sind und zum Umschließen der Kugel zusammensetzbar sind. Die Gleitschale 2 ist ebenfalls mit federnden Noppen 2.5 versehen, weist jedoch nach dem Zusammenfügen keine Schlitze auf.

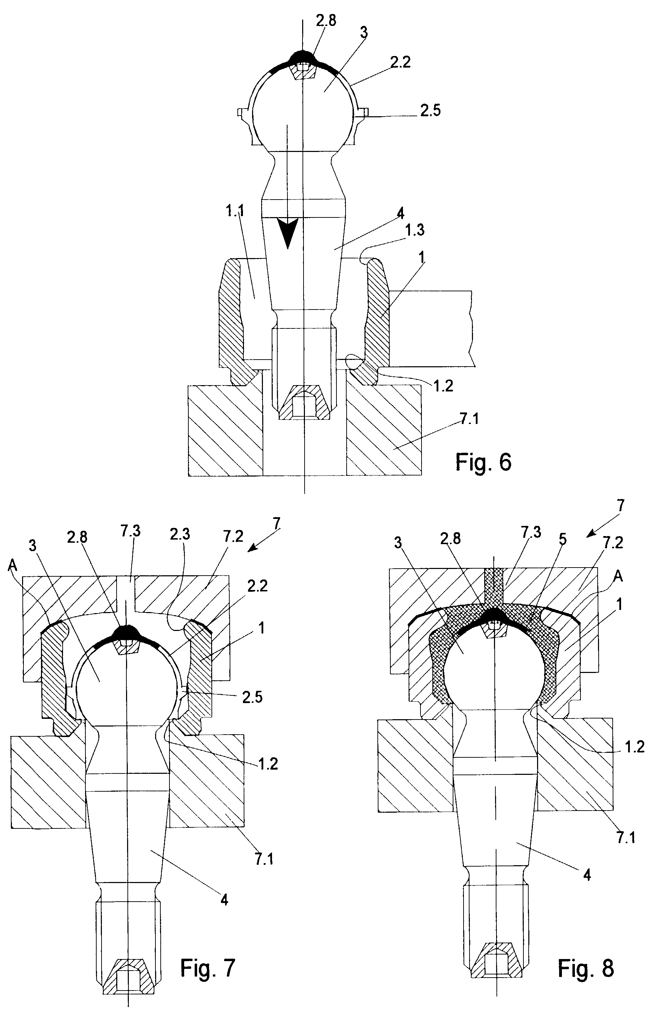

Das Einlegen des Kugelzapfens in das Gehäuse 1, welches bereits auf dem ersten Werkzeugteil 7.1 aufliegt, zeigt Fig. 6. Der Kugelzapfen 4 wird in Pfeilrichtung aus Richtung der Öffnung 1.3 des Gehäuses 1 (die als Montageöffnung dient) durch dessen Hohlraum 1.1 und die Öffnung 1.2 geführt, bis die Gleitschale 2 und die Kugel 3 über die Noppen 2.5 im Hohlraum 1.1 des Gehäuses 1 lagefixiert sind.

Nun erfolgt gern. Fig. 7 mit dem sich schließenden Werkzeug 7 durch das zweite Werkzeugteil 7.2 das Umformen des Gehäuses 1 so, daß der in Richtung zum zweiten Werkzeugteil 7.2 weisende Randbereich des Gehäuses im Bereich der Öffnung 1.3 durch Umformen in seinem Durchmesser verringert wird. Das zweite Werkzeugteil 7.2 ist dabei napfförmig ausgebildet und weist eine Bohrung 7.3 auf. Am Boden des Napfes wird der Werkstoff des Gehäuses 1 somit radial umgeformt. Die Umformfläche A bildet anschließend die Dichtfläche beim Injizieren. Die Gleitschale 2 liegt am ersten Werkzeugteil 7.1 an. Nun wird durch die Bohrung 7.3 des zweiten Werkzeugteils 7.2 das injizierfähige Material 5 in den Raum zwischen Hohlraum 1.1 und Gleitschale 2 injiziert. Die durch das Umformen verengte Öffnung 2.3 bildet dabei die Zuführöffnung für das injizierte Material 5. Durch den Druck wird die Gleitschale 2 nochmals gegen die Kugel 3 vorgespannt. In Fig. 8 wird das Werkzeug 7 nach dem Injizieren gezeigt. Der Hohlraum 1.1 ist vollständig mit Material 5 gefüllt und die Kugel 3 mit der Gleitschale 2 sicher eingebettet.

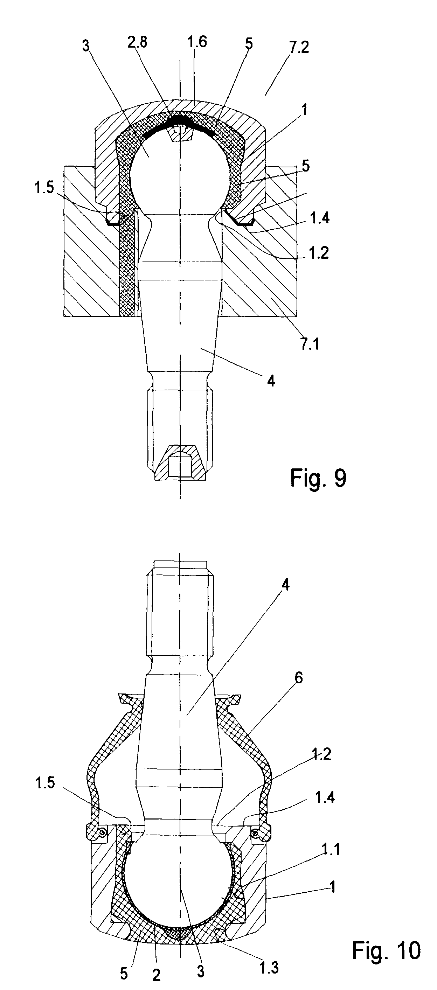

Eine weitere Ausführungsvariante ist in Fig. 9 dargestellt. Das Gehäuse 1 weist einen Hohlraum 1.1 und die in diesem Fall als Montageöffnung dienende Öffnung 1.2 zum Einlegen des Kugelzapfens 3 und der Gleitschale 2 auf. Es wird somit ein Bodenbereich 1.6 des Gehäuses 1 gebildet. An das Gehäuse 1 greift nur aus Richtung des Kugelzapfens 4 ein erstes Werkzeugteil 7.1 an, welches im dargestellten Fall eine Bohrung 7.4 für das gleichmäßige Zuführen des zu injizierenden Materials 5 aufweist. Das zu injizierende Material 5 wird über die Bohrung 7.4 des ersten Werkzeugteils 7.1 zugeführt und dringt über die Durchbrüche 1.5 in den Zwischenraum zwischen Hohlraum 1.1 und Gleitschale 2 in das Gehäuse 1. Durch das Umschließen der Gleitschale 2 und der Noppen 2.5 mit dem injizierten Material 5 wird ebenfalls ein sicherer Halt der Gleitschale 2 und der Kugel 3 gewährleistet. Zur Aufnahme der Axialkräfte erfolgte nach dem Einlegen der Gleitschale 2 und der Kugel 3 in das Gehäuse 1 das Umformen des in Richtung zum Kugelzapfen 4 weisenden Randbereichs 1.4 und der Öffnung 1.2 so daß sich die Öffnung 1.2 zumindest bereichsweise verringert, mit dem ersten Werkzeugteil 7.1. Die Durchbrüche 1.5 können gleiche oder unterschiedliche Formen aufweisen und auf gleichen oder unterschiedlichen Teilkreisen angeordnet sein.
In die Bereiche 1.2 und 1.4 des Gehäuses 1 können beispielsweise auch umlaufende Rillen oder Riefen eingebracht sein, in welche sich das injizierte Material 5 einformt und somit zuverlässig abdichtet oder es kann eine entsprechend rauhe Oberfläche vorliegen, welche die Haftung und Abdichtung zum injizierten Material gewährleistet.
Das vollständige Kugelgelenk ist in Fig. 10 dargestellt. An dem in Richtung zum Kugelzapfen 4 weisenden Randbereich 1.4 des Gehäuses 1 ein Dichtungsbalg 6 montiert, der am Kugelzapfen 4 abschließt. Somit wird eine zuverlässige Abdichtung des Kugelgelenkes gewährleistet und der Austritt von Schmierstoff aus dem Kugelgelenk vermieden.
Wie bereits vorgenannt beschrieben, wird als injizierfähiges Material vorzugsweise Kunststoff verwendet, der auch mit einem Füllstoff (z.B. Glasfasern, Glaskugeln, Fasern oder Partikel nachwachsender Rohstoffe usw.) versetzt sein kann. Es besteht auch die Möglichkeit, Elastomere oder mineralische Füllstoffe beispielsweise auf der Basis von Glas oder anderen mineralischen Verbindungen als injizierfähiges Material zu verwenden.

## Patentansprüche

1. Kugelgelenk, welches
- ein Gehäuse (1) mit einem Hohlraum (1.1) und mindestens eine Montageöffnung zur Aufnahme einer in einer Gleitschale (2) beweglich gelagerten Kugel (3) eines Kugelzapfens (4) aufweist,
- mit einer Öffnung (1.2) in dem in Richtung zum Kugelzapfen (4) weisenden Randbereich (1.4) des Gehäuses, durch welche der Kugelzapfen (4) ragt und die als Montageöffnung dienen kann,
- mit einem Zwischenraum zwischen der Wandung des Hohlraums (1.1) des Gehäuses (1) und der Außenwandung der Gleitschale (2), der mit einem injizierfähigen Material (5) gefüllt ist, sowie
- mit mindestens einer durch die Wandung des Gehäuses (1) zu dessen Hohlraum (1.1) führenden Zuführöffnung für die Injektion des injizierfähigen Materials (5),
**dadurch gekennzeichnet,**
- daß die Gleitschale (2) mindestens einen Schlitz (2.2) aufweist, der das Auffedern der Gleitschale (2.1) zum Einlegen der Kugel (3) des Kugelzapfens (4) durch deren Öffnung (2.1) und das Rückfedern der Gleitschale (2) in die Ausgangsposition gewährleistet, wobei sich der Schlitz (2.2) von der Öffnung (2.1) in Richtung zu einem gegenüberliegenden Polbereich (2.3) der Gleitschale (2) erstreckt,
und/oder
- daß die Gleitschale (2) in zwei Gleitschalenbereiche (2a, 2b) unterteilt ist, die zum umschließen der Kugel (3) zusammensetzbar sind
und/oder
- daß an der Außenwandung (2.4) der Gleitschale (2) hakenförmige federnde Noppen (2.5) angeordnet sind
und/oder
- daß der der Öffnung (2.1) der Gleitschale (2) gegenüberliegende Polbereich (2.3) eine nach außen weisende Wölbung (2.8) aufweist
und/oder
- daß der sich an die Montageöffnung anschließende Randbereich des Gehäuses (1) an seinem gesamten Umfang oder segmentweise sich nach dem Montieren der Gleitschale (2) und der Kugel (3) so verjüngt, daß die Breite der Montageöffnung umlaufend oder bereichsweise geringer ist, als der Durchmesser der Gleitschale (2)
und/oder
- daß das Gehäuse (1) mindestens eine sich an dessen Hohlraum (1.1) anschließende Aussparung (1.5) und/oder Durchmesserveränderung aufweist, in welcher das injizierte Material (5) verdrehsicher zum Gehäuse (1) verankert ist.

2. Kugelgelenk nach Anspruch 1, dadurch gekennzeichnet, daß die Schlitze (2.2) geradlinig öder spiralförmig ausgebildet sind.

3. Kugelgelenk nach Anspruch 1, dadurch gekennzeichnet, daß die Gleitschalenbereiche (2a, 2b) über ein Faltscharnier (2c) miteinander verbunden sind.

4. Kugelgelenk nach Anspruch 1 oder 3, dadurch gekennzeichnet, daß an den aneinander anliegenden Randbereichen der Gleitschalenbereiche (2a, 2b) Rastelemente (2d) zu deren Zusammenfügen angeordnet sind.

5. Kugelgelenk nach einem der Ansprüche 1, 3 oder 4, dadurch gekennzeichnet, daß die Randbereiche der Gleitschalenbereiche nach deren Zusammenfügen dicht aneinander anliegen.

6. Kugelgelenk nach einem der Ansprüche 1, 3 oder 4, dadurch gekennzeichnet, daß die Randbereiche ineinandergreifende Elemente aufweisen.

7. Kugelgelenk nach Anspruch 1, dadurch gekennzeichnet, daß sich die freien beweglichen Enden (2.6) der Noppen (2.5) im Wesentlichen tangential zur Wölbung der Außenwandung (2.4) der Gleitschale (2) erstrecken und radial in Richtung zur Gleitschale (2) federnd ausgebildet sind.

8. Kugelgelenk nach Anspruch 1 oder 7, dadurch gekennzeichnet, daß sich die Noppen (2.5) an die Schlitze (2.2) anschließen.

9. Kugelgelenk nach einem der Ansprüche 1, 7 oder 8, dadurch gekennzeichnet, daß die Noppen (2.5) aus dem gleichen Werkstoff wie die Gleitschale (2) bestehen.

10. Kugelgelenk nach einem der Ansprüche 1 oder 7 bis 9, dadurch gekennzeichnet, daß die Noppen (2.5) an die Gleibschale (2) angeformt sind.

11. Kugelgelenk nach einem der Ansprüche 1 oder 7 bis 10, dadurch gekennzeichnet, daß die beweglichen Enden (2.6) der Noppen (2.5) nach dem Einlegen in das Gehäuse (1) an der Wandung des Hohlraums (1.1) des Gehäuses (1) lagefixierend anliegen und nach dem Inzizieren des Materials verdrehsicher in diesem, eingebettet sind.

12. Kugelgelenk nach einem der Ansprüche 1 oder 7 bis 11, dadurch gekennzeichnet, daß die Noppen (2.5) mit den beweglichen Enden (2.6) in etwa auf dem Äquatorbereich (2.7) der Gleitschale (2) angeordnet sind.

13. Kugelgelenk nach einem der Ansprüche 1 oder 7 bis 12, dadurch gekennzeichnet, daß die Noppen (2.5) und die beweglichen Enden (2.6) einzeln oder paarweise in gleichen Teilungsabständen angeordnet sind.

14. Kugelgelenk nach einem der Ansprüche 1 oder 7 bis 13, dadurch gekennzeichnet, daß die Noppen (2.5) und die beweglichen Enden (2.6) mit Montageschrägen versehen sind.

15. Kugelgelenk nach Anspruch 1, dadurch gekennzeichnet, daß die Lagerschale (2) eine im Bereich der Wölbung (2.8) verstärkte Wandung (2.4) aufweist.

16. Kugelgelenk nach Anspruch 1, dadurch gekennzeichnet, daß die Wandung (2.4) der Lagerschale (2) im Bereich der Wölbung (2.8) nicht verstärkt ist und die sich dadurch in Richtung zur Kugel (3) bildende Aussparung zur Aufnahme von Schmiermittel dient.

17. Kugelgelenk nach Anspruch 1, dadurch gekennzeichnet, daß die Montageöffnung des Gehäuses (1) für die Gleitschale (2) gleichzeitig die Zuführöffnung für das zu injizierende Material (5) ist.

18. Kugelgelenk nach Anspruch 1 oder 17, dadurch gekennzeichnet, daß die Zuführöffnung für das zu Injizierende Material an der der Öffnung (1.2) gegenüberliegenden Seite des Gehäuses (1) angeordnet ist.

19. Kugelgelenk nach einem der Ansprüche von 1 bis 9, dadurch gekennzeichnet, daß als injizierfähiges Material (5) ein Kunststoff, ein mineralischer Stoff, mineralische Verbindungen oder Kombinationen dieser Materialien Anwendung finden.

20. Verfahren zur Herstellung eines Kugelgelenkes durch injizieren eines injizierfähigen Materials (5) in den Zwischenraum zwischen eine Wandung einer Gleitschale (2), in welcher sich eine Kugel (3) eines Kugelzapfens (4) befindet und eine Wandung eines Hohlraumes (1.1) eines Gehäuses (1), wobei die Gleitschale (2) mit der Kugel (3) des Kugelzapfens (4) in dem Hohlraum (1.1) positioniert wird und das Gehäuse (1) mindestens eine in Richtung zum Kugelzapfen (4) weisende Öffnung (1.2) aufweist, unter Anwendung eines ersten Werkzeugteils (7.1), welches am Gelenk aus Richtung des Kugelzapfens (4) angreift und bedarfsweise mit einem zweiten Werkzeugteil (7.2), welches dem ersten Werkzeugteil gegenüberliegend angeordnet ist und am Gehäuse angreift, wobei beide Werkzeugteile (7.1, 7.2) zum Beschicken der zu verbindenden Elemente und zur Entnahme des Gelenks relativ zueinander bewegbar sind und beim Injizieren am Gehäuse (1) abdichten, insbesondere nach einem der Ansprüche von 1 bis 19, dadurch gekennzeichnet, daß durch außen an der Wandung der Gleitschale (2) angeordnete federnde Noppen (2.5) die Positionierung im Gehäuse (1) erfolgt, daß anschließend beim Schließen des Werkzeugs mit dem Werkzeugteil, welches aus Richtung der Montageöffnung angreift, unter Ausnutzung der Schließkraft, gleichzeitig das umlaufende oder bereichsweise Umformen des Randbereiches der Montageöffnung erfolgt und anschließend das injizierfähige Material über die Zuführöffnung in den Zwischenraum zwischen Wandung (2.4) der Gleitschale (2) und Wandung des Hohlraumes (1.1) des Gehäuses (1) injiziert wird und dabei gleichzeitig verdrehsicher die federnden Noppen (2.5) umschließt.

21. Verfahren nach Anspruch 20, dadurch gekennzeichnet, daß die innerhalb des Spritzwerkzeuges (7) umgeformte Fläche (A) eine 100%ige Dichtfläche darstellt.
